Europäisches Patentamt

European Patent Office

Office européen des brevets

(11) Veröffentlichungsnummer: **0 184 037 B1**

(19)

## (12) EUROPÄISCHE PATENTSCHRIFT

(45) Veröffentlichungstag der Patentschrift: **02.01.92**

(51) Int. Cl.⁵: **B01D 46/04**

(21) Anmeldenummer: **85114413.9**

(22) Anmeldetag: **13.11.85**

(54) **Pneumatisches Fördergerät mit Filteranlage.**

(30) Priorität: **30.11.84 DE 3443709**

(43) Veröffentlichungstag der Anmeldung:
**11.06.86 Patentblatt 86/24**

(45) Bekanntmachung des Hinweises auf die
Patenterteilung:
**02.01.92 Patentblatt 92/01**

(84) Benannte Vertragsstaaten:
**CH DE FR GB IT LI NL SE**

(56) Entgegenhaltungen:
**EP-A- 0 014 987      DE-A- 2 516 261
DE-A- 2 917 052      DE-B- 2 253 060
DE-U- 7 720 013      FR-A- 2 482 063
US-A- 3 932 152      US-A- 4 019 641
US-A- 4 157 899**

**CHEMIE INGENIEUR TECHNIK, Band 56, Nr.2,
Februar 1984, Seiten 99-103, W.
FLATT:"Neuere apparative Entwicklungen
bei Gewebe- und Faserfiltern"**

(73) Patentinhaber: **Bühler GmbH
Ernst-Amme-Strasse 19
W-3300 Braunschweig(DE)**

(72) Erfinder: **Heckel, Hans
Emil-Berg-Strasse 7
W-3302 Cremlingen(DE)**
Erfinder: **Wiersdorff, Dieter, Dipl.-Ing.
Mühlenweg 11
W-3174 Wedelheine/Meine(DE)**

**Beschreibung**

Die Erfindung bezieht sich auf ein pneumatisches Fördergerät nach dem Oberbegriff des Anspruches 1. Bei Fördergeräten mit solchen Filteranlagen arbeitet die Reinigungsvorrichtung im allgemeinen recht gut, wenn es sich um relativ kurze Lanzen handelt, wie sie etwa die DE-U-77 20 013 veranschaulicht. Bei grösseren Lanzenlängen und damit einer grösseren Anzahl von Spülrohren fällt die Stärke des Druckluftstosses, wie er zum Abreinigen der Filterschläuche erforderlich ist, in den einzelnen Spülrohren einer Lanze recht unterschiedlich aus, und wie praktische Untersuchungen gezeigt haben, insbesondere im - bezogen auf die Einströmrichtung der Druckluft - Anfangsbereich sowie im Endbereich der einzelnen Lanze.

Diese differierende Spülstossstärke hätte dementsprechend unterschiedliche Abreinigungsgrade bei den Filterschläuchen der einer Lanze zugeordneten Filterelemente zur Folge. Ungleiche Abreinigung bedeutet aber, dass die einzelnen Filterelemente von sehr unterschiedlichen Mengen des zu reinigenden Mediums (Rohgas) durchströmt werden und die installierte Filterfläche bzw. Filterleistung somit nicht voll ausgenutzt würde. Dieses Manko ist praktisch weniger gravierend, wenn die Filterfläche so reichlich bemessen werden kann, dass - insgesamt gesehen - die zu filternde Rohgasmenge trotz schlechten Wirkungsgrades von einem Teil der Filterelemente pro Zeiteinheit durchgesetzt wird. Für alle jene Einsatzfälle, wo die Unterbringung der Filterfläche bzw. einer grossen Zahl von Filterelementen gar nicht möglich oder mit erheblichen Schwierigkeiten verbunden ist, wie es insbesondere bei Filteranlagen für pneumatische Förderanlagen wie Saugheber, der Fall ist, ist jedes wegen ungenügender Abreinigung seines Filterschlauches nicht voll leistungsfähige Filterelement ein gewichtiger Nachteil, weil es im Endeffekt die garantierte Filterleistung der Filteranlage in Frage stellt.

Nun wäre es zwar denkbar, anstelle langer Abreinigungslanzen eine grössere Anzahl von kurzen bekannten Lanzen einzusetzen, doch versteht es sich, dass damit der konstruktive und platzmässige Aufwand sowie die Kosten erheblich steigen.

Demnach liegt der Erfindung die Aufgabe zugrunde, die aus den Spülrohren einer Lanze der Reinigungsvorrichtung auf die zugeordneten Filterschläuche einwirkenden Spülstösse bzw. Druckluftkräfte zu vergleichmässigen, damit alle Filterschläuche im gleichen Masse und optimal abgereinigt werden bzw. auf diese Weise die Kosten einer Unterteilung in kleinere Lanzen zu vermeiden. Diese Aufgabe wird durch die kennzeichnenden Merkmale des Anspruches 1 gelöst.

Durch die Anwendung eines solchen Strömungsleitmittels einerseits und die Querschnittsvergrösserung des in Einströmrichtung ersten Spülrohres jeder Lanze andererseits wird eine ausreichende Egalisierung der Spülluftstösse in den Spülrohren der zugehörigen Lanze erzielt, d.h. eine weitgehende Angleichung in puncto Stossintensität und damit eine Annäherung an den Idealfall, welcher gleichen Abreinigungsgrad bei allen Filterschläuchen, gleichen Schlauchwiderstand und Beteiligung aller Filterschläuche im selben Masse am Filtervorgang und hieraus resultierend eine gleichmässige Auslastung der Gesamtfilterfläche bedeutet.

Wenn das Strömungsleitmittel entsprechend Anspruch 3 ausgebildet ist, kann ein handelsübliches Halbzeug hierfür verwendet werden. Im Falle der ausgestaltung nach Anspruch 4 hingegen bildet das Strömungsleitmittel eine Einheit mit dem ersten Spülrohr der zugeordneten Lanze, was einerseits preisgünstig ist, anderseits gesonderte Befestigungselemente überflüssig macht. Mit Vorteil kann eine solche Ausgestaltung bei Filteranlagen verwendet werden, die auch unterhalb des Drucklufttankes jeder Reinigungsvorrichtung Filterelemente aufweisen, wobei das Spülrohr an seiner Lanze im Bereich des Drucklufttankes angeordnet wird.

Ein pneumatisches Fördergerät umfasst vorzugsweise ein Filter, dessen Gehäuse von einer tragenden Säule gebildet ist, da wie erwähnt, gerade bei so engen Platzverhältnissen in einer Säule die Anforderungen besonders kritisch sind. Wenn dann ein solches Fördergerät entsprechend dem Kennzeichen des Anspruches 6 ausgebildet ist, kann innerhalb des Säulenquerschnitts ein Maximum an Filterfläche, d.h. möglichst viele Filterelemente, untergebracht und die Steuerleitungen für die Ventile der Lanzen mittig zugeführt werden.

Damit der Drucklufttank in das Säuleninnere verlagert werden kann und so einerseits eine Schwächung des Säulenmantels, anderseits eine Beeinträchtigung an den Drucklufttanks durch die Witterung vermieden ist und dennoch Platz für das Unterbringen von Filterelementen zur Verfügung steht bzw. die zur Verfügung stehende Säulenquerschnittsfläche keine Minderung erfährt, sind die Merkmale des Anspruches 7 vorgesehen.

Durch die Ausgestaltung nach Anspruch 8 ergibt sich eine sehr günstige Möglichkeit, die Filterelemente nach oben hin auszubauen, ohne die Lanzen demontieren zu müssen, die ja durch die Erfindung relativ lang und daher gegebenenfalls sehr schwierig auszubauen wären.

Durch die Ausgestaltung nach Anspruch 9 und insbesondere durch die nach Anspruch 10 wird zum einen der bei jedem Quadranten des Säulenquerschnitts für die Belegung mit Filterelementen ausgenutzte Flächenanteil erhöht, wobei die gemäss Anspruch 10 vorgesehene Ausnehmung für eine optimale Spülstossintensität auch in den seitlich abzweigenden Spülrohren jener Lanze sorgt, die der zweireihigen Filterelementgruppe zugeordnet ist.

In der Zeichnung ist ein Ausführungsbeispiel eines pneumatischen Fördergerätes gemäss der Erfindung veranschaulicht und wird nachfolgend beschrieben. Es zeigen:

Fig. 1    teilweise einen Längsschnitt durch die Säule eines Saughebers mit der von ihr aufgenommenen Filteranlage in Ansicht,

Fig. 2    teilweise einen Querschnitt durch die Saughebersäule nach Fig. 1 mit der Filteranlage in Draufsicht,

Fig. 3    einen Längsschnitt durch die Reinigungsvorrichtung einer Filtereinheit der Filteranlage nach Linie III-III in Fig. 2 im größeren Maßstab,

Fig. 4    einen Längsschnitt durch eine Lanze der Reinigungsvorrichtung nach Linie IV-IV in Fig. 3 mit dem zugeordneten Strömungsleitmittel im Querschnitt,

Fig. 5    einen Längsschnitt durch die einer zweireihigen Filterelementgruppe zugeordnete Lanze einer Reinigungsvorrichtung, ebenfalls im größeren Maßstab,

Fig. 6    einen Querschnitt durch die Reinigungsvorrichtung nach Linie VI-VI in Fig. 5 und

Fig. 7    ein Schaubild für die Spülstoßintensität in den einzelnen Spülrohren verschiedenartig gestalteter Lanzen einer Reinigungsvorrichtung.

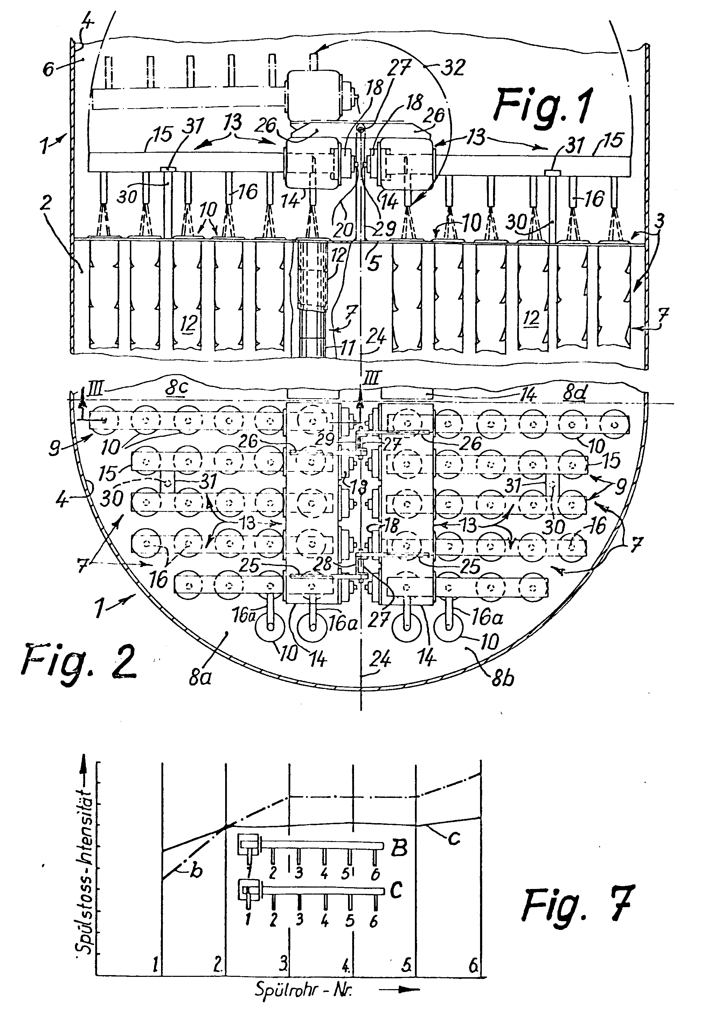

In der zylindrischen Drehsäule 1 eines nicht weiter dargestellten Saughebers sind übereinander ein mit der Saugförderleitung verbundener Rezipient 2 und eine Filteranlage 3 angeordnet. Die Wand 4 der Drehsäule 1 bildet sowohl für den Rezipienten 2 als auch für die Filteranlage 3 das Gehäuse. Ein Boden 5 trennt den Rezipienten 2 von einer Reinluftkammer 6, welche an einem Unterdruckerzeuger in Form eines nicht veranschaulichten, bekannten Sauggebläses angeschlossen ist. Der Rezipient 2 mündet unten in einer ebenfalls nicht dargestellten Zellenradschleuse als Austragvorrichtung für das abgeschiedene Fördergut, z. B. Schwergetreide und deren Derivate. Die Filteranlage 3 umfaßt vier Filtereinheiten 7, von denen jeweils eine in jedem Quadranten 8a bis 8d des Kreisquerschnitts der Drehsäule 1 plaziert ist (Fig. 2). Jede dieser Filtereinheiten 7 wird von fünf ein- oder zweireihigen Filterelementgruppen 9 mit je sechs oder fünf Filterelementen 10 gebildet. Wie Fig. 2 zeigt, besitzt in jedem Quadranten 8a bis 8d die eine äußere Filterelementgruppe 9 zwei Reihen Filterelemente 10 und besitzen die andere äußere sowie alle inneren Filterelementgruppen 9 je eine Reihe Filterelemente 10. Jedes dieser Filterelemente 10 mit Kreisquerschnitt ragt durch eine entsprechend bemessene Ausnehmung im Boden 5 in den Rezipienten 2 hinein und setzt sich aus einem Filterkorb 11 und einem letzteren übergestreiften Filterschlauch 12 zusammen. Filterkorb 11 und Filterschlauch 12 besitzen je am oberen Ende einen Kragen, wobei der Kragen des Filterschlauches 12 dichtend auf dem Boden 5 und der Kragen des Filterkorbes 11 auf dem Filterschlauchkragen aufliegt und mittels einer leicht lösbaren Verriegelung auf dem Boden 5 fixiert ist.

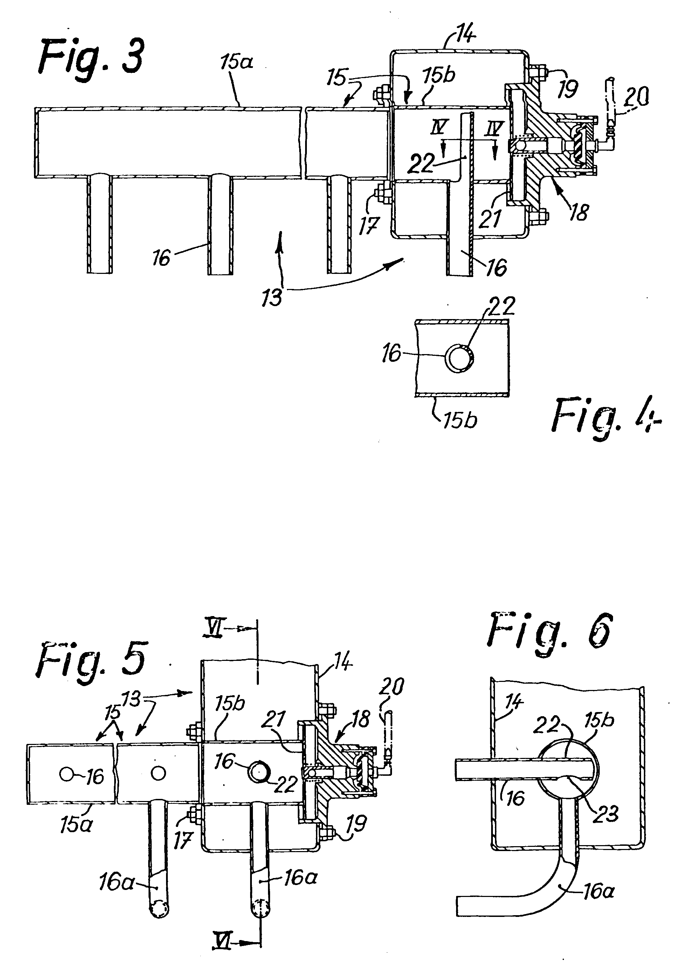

Einer jeden von den vier Filtereinheiten 7 der Filteranlage 3 ist eine Reinigungsvorrichtung 13 zugeordnet. Diese Reinigungsvorrichtung 13 besteht aus einem Drucklufttank 14 und fünf Lanzen 15 mit je einer Anzahl zu einer axialen Reihe formierter Spülrohre 16. Die Anzahl Lanzen 15 entspricht der Anzahl Filterelementgruppen 9 der zugeordneten Filtereinheit 7, und die Anzahl Spülrohre 16 jeder Lanze 15 entspricht nach Anzahl und Achsabstand der Anzahl und dem Achsabstand der Filterelemente 10 der zugehörigen Filterelementgruppe 9, so daß - wie die Fig. 1 und 2 erkennen lassen - in der Arbeitsstellung der Reinigungsvorrichtung 13 jedes ihrer Spülrohre 16 längsachsgleich zu dem zugeordneten Filterelement 10 bzw. seinem Filterschlauch 12 liegt. Eine jede Lanze 15 ist aus Montagegründen zweiteilig gestaltet und umfaßt einen äußeren rohrförmigen Lanzenteil 15a und einen inneren rohrförmigen Lanzenteil 15b. Der Lanzenteil 15a ist an seinem äußeren Ende geschlossen und an seinem inneren Ende offen und mittels Schrauben 17 an den Drucklufttank 14 geflanscht; der durchmessergleiche Lanzenteil 15b ist an beiden Enden offen und so in den Drucklufttank 14 hineinragend angeordnet und mit diesem verschweißt, daß seine dem Lanzenteil 15a zugewandte Öffnung deckungsgleich ist mit dessen Öffnung (Fig. 3, 5). Von den vier Lanzen 15 der Reinigungsvorrichtung 13, welche je einer einreihigen Filterelementgruppe 9 zugeordnet sind, zweigen vertikal nach unten im Bereich des äußeren Lanzenteils 15a je fünf bzw. vier Spülrohre 16 und im Bereich des innerhalb des Drucklufttanks 14 gelegenen Lanzenteils 15b zweigt je ein Spülrohr 16 ab (Fig. 2, 3). Die einer zweireihigen, außen im Quadranten 8a bis 8d befindliche Filterelementgruppe 9 zugeordnete Lanze 15 hat für die erste Filterelementreihe mit vier Filterelementen 10 vier vertikal abzweigende, gerade Spülrohre 16, wovon drei mit dem äußeren Lanzenteil 15a und eines mit dem inneren Lanzenteil 15b verbunden sind, sowie für die zweite Filterelementreihe mit zwei Filterelementen 10 zwei seitlich abzweigende, gekrümmte Spülrohre 16a, von welchen das eine mit dem Lanzenteil 15a und das andere mit dem Lanzenteil 15b verbunden ist (Fig. 2, 5, 6). Das innerhalb des Drucklufttanks von dem Lanzenteil 15b abzweigende Spülrohr 16 bzw. 16a jeder Lanze 15 ist im Durchgangsquerschnitt um 30 % größer bemessen als die übrigen Spülrohre 16 bzw. 16a.

Zum Beaufschlagen jeder Lanze 15 einer Reinigungsvorrichtung 13 mit Druckluft ist ihr ein Steuerventil 18 bekannter Bauart und Funktion zugeordnet, das in eine Ausnehmung im Drucklufttank 14 eingesetzt und an letzterem durch Schrauben 19 befestigt ist. Der pneumatisch über eine Druckluftleitung 20 gesteuerte Ventilteller 21 des Steuerventils 18 verbindet die zugehörige Lanze 15 mit dem Drucklufttank 14, indem er von der Lanze 15 abgehoben wird, oder er trennt beide voneinander, indem er stirnseitig durch Federkraft auf die Lanze gepreßt wird. Der Drucklufttank 14 steht in bekannter Weise über ein Druckregelventil mit einer Druckluftquelle in Verbindung.

In jeder Lanze 15 einer Reinigungsvorrichtung 13 - siehe die Fig. 3 bis 6 - ist an ihrem einströmseitigen Ende bei der Abzweigung des ersten Spülrohres 16 bzw. 16a ein schaufelförmiges Strömungsleitmittel 22 vorgesehen, das sich annähernd über den gesamten Durchmesser der Lanze 15 erstreckt und mit seiner konvexen Seite zum einströmseitigen Ende der Lanze 15 bzw. zum Ventilteller 21 weist (Fig. 4, 5). Das Strömungsleitmittel 22 ist mit dem ersten, innerhalb des Drucklufttanks 14 vom Lanzenteil 15b abzweigenden Spülrohr 16 (Fig. 3) bzw. 16a (Fig. 5) aus einem Stück gefertigt, indem dieses Spülrohr 16, 16a am oberen Ende eine bestimmte Länge diametral geteilt und die eine Rohrhälfte auf dieser Länge ausgeklinkt ist (Fig. 3). Das Strömungsleitmittel 22 jeder Lanze 15, die einer zweireihigen Filterelementgruppe 9 zugeordnet ist, hat an seinem dem einströmseitig ersten seitlich abzweigenden Spülrohr 16a zugekehrten Rand eine kreissegmentförmige Ausnehmung 23, welche das Einströmen der Druckluft in dieses Spülrohr 16 verbessert.

Um die Filterelemente 10 leicht nach oben ausbauen zu können, beispielsweise bei Defekt ihres Filterschlauches 12, ist jede Reinigungsvorrichtung 13 schwenkbeweglich gelagert und über die ihr an der Längsmittelebene 24 gegenüberliegende Reinigungsvorrichtung 13 klappbar, d. h. - bezogen auf Fig. 2 - die Reinigungsvorrichtung 13 im Quadranten 8a ist über die Reinigungsvorrichtung 13 im Quadranten 8b und umgekehrt klappbar, desgleichen die Reinigungsvorrichtung 13 im Quadranten 8c über die Reinigungsvorrichtung 13 im Quadranten 8d und umgekehrt (Fig. 1 - Außerbetriebstellung in strichpunktierten Linien). Hierfür hat der Drucklufttank 14 der einzelnen Reinigungsvorrichtung 13 zwei fest mit ihm verbundene Schwenkarme 25, 26, die je auf einer Achse 27 schwenkbeweglich gelagert sind, welche ihrerseits von einem auf dem Boden 5 angebrachten Lagerbock 28 bzw. 29 aufgenommen wird. Die Reinigungsvorrichtung 13 wird in der Arbeitsstellung von einer am Boden 5 befestigten Stütze 30 abgefangen, auf der sie mit Hilfe einer an zwei ihrer Lanzen 15 befestigten Stützplatte 31 ruht. Wird eine Reinigungsvorrichtung 13 von Hand gemäß Doppelpfeil 32 in die Außerbetriebstellung geklappt, so stützt sie sich mit ihren beiden Schwenkarmen 25, 26 auf dem Drucklufttank 14 der benachbarten Reinigungsvorrichtung 13 ab, über die sie geschwenkt ist.

Das Abreinigen der Filterschläuche 12 der Filterelemente 10 erfolgt in der bekannten Weise. Ein Steuergerät betätigt in vorgegebenen Zeitabständen über die Druckluftleitung 20 nacheinander das Steuerventil 18 jeder Lanze 15 und dieses öffnet für eine sehr kurze Zeitspanne seinen Ventilteller 21, so daß die unter dem Druck von 3,5 bar im Drucklufttank 14 stehende Druckluft schlagartig an dem Strömungsleitmittel 22 vorbei in das Innere der Lanze 15 sowie deren Spülrohre 16, 16a schießt; der Druckluftstrom prallt auf den Boden der Lanze 15 und von hier zurück; bei diesem Rückprall setzt das Strömungsleitmittel 22 aufgrund seiner hohlen Form dem Druckluftstrom einen hohen Widerstand entgegen und verhindert so, daß innerhalb der Öffnungszeit des Ventiltellers 21 eine nennenswerte Druckluftmenge in den Drucklufttank 14 zurückströmt. Der zwischen dem Boden der Lanze 15 und ihrem Strömungsleitmittel 22 sich kurzzeitig aufbauende Druckstau sorgt dafür, daß alle Spülrohre 16, 16a der Lanze 15 annähernd gleichmäßig mit Druckluft beaufschlagt werden und der aus ihnen auf die Filterschläuche 12 der zugeordneten Filterelemente 10 einwirkende Druckluftstoß auch in den ersten bzw. drucklufteinströmseitig gelegenen Spülrohren 16, 16a dieselbe Stärke hat und somit auch die aus diesen Spülrohren beaufschlagten Filterschläuche 12 einwandfrei gereinigt werden. Bei diesem Vorgang sorgt die Ausnehmung 23 in dem Strömungsleitmittel 22 jeder Lanze 15 einer außenliegenden, zweireihigen Filterelementgruppe 9 dafür, daß der Spülstoß aus ihren beiden seitlich abzweigenden Spülrohren ebenfalls von gleicher Intensität ist.

Das Diagramm nach Fig. 7 zeigt die Spülstoßstärke von zwei verschiedenen Lanzen mit je sechs Spülrohren aufgetragen über die Lanzenlänge, wobei die Kurve b die Spülstoßintensität einer Lanze mit einem Spülrohr im Bereich des Drucklufttanks und gleichem Durchmesser bei allen Spülrohren (kleine Darstellung B) und die Kurve c eine gemäß der Erfindung ausgebildete Lanze mit einem Strömungsleitmittel, einem Spülrohr im Bereich des Drucklufttanks sowie mit einem größeren Durchmesser bei dem ersten Spülrohr (kleine Darstellung C) veranschaulicht. Man erkennt aus der Kurve b die Differenzen der Spülstöße bei den Spülrohren der Lanze B, sowie die ungenügende Stärke des Spülstoßes aus dem ersten Spülrohr.

Im Gegensatz dazu sind nach Kurve c die Spülstöße aus den Spülrohren der erfindungsgemäß mit einem Strömungsleitmittel ausgerüsteten Lance C annähernd gleich und sämtlich von ausreichender Intensität.

Der mit der Erfindung erzielte Fortschritt besteht im wesentlichen darin, daß ohne jedwede Schwächung des tragenden Säulenquerschnitts des Saughebers die erforderliche Filterfläche bzw. Filterleistung installiert wird, wobei die gesamte Filteranlage witterungsgeschützt von der Säule umschlossen ist; weitere gravierende Vorteile sind die Möglichkeit zum Austausch der Filterelemente ohne die Demontage von Lanzen in einfacher Weise und in kürzester Zeit sowie ferner eine optimale und annähernd gleiche Spülstoßstärke bei allen Spülrohren jeder Lanze einer Reinigungsvorrichtung.

**Patentansprüche**

1. Pneumatisches Fördergerät mit einem an eine Zuführleitung für das zu reinigende gasförmige Medium angeschlossenen Gehäuse (1) und wenigstens einer von diesem aufgenommenen Filtereinheit (7), die aus einer Vielzahl von je aus einem Filterschlauch (12) und einem Filterkorb (11) aufgebauter, gruppenweise zusammengefasster Filterelemente (10) besteht, wobei jeder Filtereinheit (7) eine Reinigungsvorrichtung (13) zum periodischen Abreinigen der Filterschläuche (12) ihrer Filterelemente mittels Druckluftstössen zugeordnet ist, welche aus einem, zweckmässig innerhalb des Gehäuses (1) angeordneten Drucklufttank (14) und mindestens einer über ein gesteuertes Absperrorgan (18) mit diesem verbundenen, ein Spülrohr (16) für jedes Filterelement (10) der zugeordneten Filterelementgruppe aufweisenden Lanze (15) besteht, deren Spülrohre (16) hinsichtlich ihrer Luftaustrittsöffnungen mit vorgegebenem Abstand über den Filterelementen (10) angeordnet und auf deren Inneres gerichtet sind, <u>dadurch</u> <u>gekennzeichnet</u>, dass innerhalb des <u>Gehäuses</u> (1), das insbesondere als Säule eines Saughebers ausgebildet ist, in jeder Lanze (15) einer Reinigungsvorrichtung (13) an ihrem einströmseitigen Ende vor oder an der Abzweigung des ersten Spülrohres (16, 16a) ein Strömungsleitmittel (22) vorgesehen ist, das in Einströmrichtung der Druckluft einen kleinen Strömungswiderstand und in der entgegengesetzten Richtung einen grossen Strömungswiderstand hat, und dass der Durchgangsquerschnitt des ersten Spülrohres (16, 16a) grösser ist als der Durchgangsquerschnitt jedes der übrigen Spülrohre (16, 16a) der Lanze (15).

2. Fördergerät nach Anspruch 1, dadurch gekennzeichnet, dass das Strömungsleitmittel (22) als annähernd über den gesamten Durchmesser der Lanze (15) sich erstreckende Schaufel geformt ist, deren Querschnittsprofil nach der einen Seite erhaben (konvex) und nach der Gegenseite hohl (konkav) ist und deren erhabene Seite dem in die Lanze (15) einströmenden Druckluftstrom entgegengerichtet ist.

3. Fördergerät nach Anspruch 2, dadurch gekennzeichnet, dass das Strömungsleitmittel (22) ein diametral halbierter Hohlzylinder ist.

4. Fördergerät nach Anspruch 3, dadurch gekennzeichnet, dass der Hohlzylinder ein diametral geteiltes Rohr (22) ist, das mit einem Spühlrohr (16, 16a) aus einem Stück besteht.

5. Fördergerät nach Anspruch 4, dadurch gekennzeichnet, dass das mit dem Strömungsleitmittel (22) vereinigte Spülrohr (16, 16a) im Bereiche des Drucklufttankes (14) von der Lanze (15) abgezweigt ist.

6. Fördergerät nach einem der Ansprüche 1 bis 5, wobei das Gehäuse von einer tragenden, Säule (1) gebildet ist, dadurch gekennzeichnet, dass in den Quadranten (8a - 8d) des Säulenquerschnittes je eine Filtereinheit (7) plaziert ist, und dass die Drucklufttanks (14) ihrer Reinigungsvorrichtungen (13) an einer Längsmittelebene (24) der Säule (1) und mit ihrer Ventilseite parallel zu dieser (24) angeordnet sind.

7. Fördergerät nach Anspruch 6, dadurch gekennzeichnet, dass Filterelemente (10) auch unter dem Drucklufttank (14) jeder Filtereinheit (7) im Quadranten (8a - 8d) vorgesehen sind und zum Beaufschlagen dieser Filterelemente (10) mit Druckluft Spülrohre (16, 16a) im Bereiche der Drucklufttanks (14) von den Lanzen (15) abgezweigt sind.

8. Fördergerät nach Anspruch 6 oder 7, dadurch gekennzeichnet, dass jede Reinigungsvorrichtung (13) von der zugeordneten Filtereinheit (7) wegschwenkbar ausgebildet und mit ihrer Schwenkachse (27) in der die Quadranten (8a - 8d) voneinander trennenden Längsmittelebene (24) sowie nahe der Lanzenebene plaziert ist, so dass jeweils von zwei zu beiden Seiten dieser Längsmittelebene (24) liegenden Filtereinheiten (7) die Reinigungsvorrichtung (13) der einen Filtereinheit (7) über die Reinigungsvorrichtung (13) der anderen Filtereinheit (7) und umgekehrt klappbar ist.

9. Fördergerät nach Anspruch 7 oder 8, dadurch gekennzeichnet, dass eine von den beiden aussen im Quadranten (8a - 8d) befindlichen Filterelementengruppen (9) in zwei Reihen Filterelemente (10) aufgegliedert ist, deren Spülrohre (16, 16a) eine gemeinsame Lanze (15) haben.

10. Fördergerät nach Anspruch 9, dadurch gekennzeichnet, dass die Lanze (15) der aussen befindlichen, zweireihigen Filterelementgruppe (9) für die eine Filterelementreihe vertikal abzweigende Spülrohre (16) und für die andere Filterelementreihe seitlich abzweigende Spülrohre (16a) aufweist, wobei das Strömungsleitmittel (22) dieser Lanze (15) an seinem dem einströmseitig ersten seitlich abzweigenden Spülrohr (16a) zugekehrten Rand mit einer Ausnehmung (23) versehen ist.

## Claims

1. Pneumatic conveyor apparatus having a housing (1) connected to a supply conduit for the gaseous medium intended for cleaning, and at least one filter unit (7) which is accommodated by the said housing and which comprises a plurality of grouped filter elements (10) constructed to have each a filter hose (12) and a filter basket (11), each filter unit (7) having associated with it a cleaning device (13) for the periodic cleaning of the filter hoses (12) of its filter elements by means of bursts of compressed air, which device comprises a compressed-air tank (14) advantageously situated within the housing (1) and at least one jet pipe (15) which is connected thereto via a controlled shutoff device (18) and which has a scavenging pipe element (16) for each filter element (10) of the associated filter element group, and whose scavenging pipe elements (16) are arranged, as regards their air outlet apertures, at a predetermined spacing above the filter elements (10), and are directed to the interior thereof, characterised in that within the housing (1) which is constructed especially as a column of a pneumatic suction elevator, in every jet pipe (15) of a cleaning device (13) there is provided at its inflow end, before or at the branch-off point of the first scavenging pipe element (16, 16a), a flow guide means (22) which has a low flow resistance in the compressed-air inflow direction and a high flow resistance in the opposite direction, and that the through flow cross-section of the first scavenging pipe elements (16, 16a) is larger than the through flow cross-section of each of the other scavenging pipe elements (16, 16a) of the jet pipe (15).

2. Conveyor apparatus according to claim 1, characterised in that the flow guide means (22) is formed as a scoop which extends approximately over the entire diameter of the jet pipe (15) and whose cross-sectional profile protrudes (convex) to one side and is hollow (concave) towards the opposite side, and whose protruding side is directed oppositely to the flow of compressed air flowing into the jet pipe (15).

3. Conveyor apparatus according to claim 2, characterised in that the flow guide means (22) is a diametrally bisected hollow cylinder.

4. Conveyor apparatus according to claim 3, characterised in that the hollow cylinder is a diametrally divided pipe element (22) which is made in one piece with a scavenging pipe element (16, 16a).

5. Conveyor apparatus according to claim 4, characterised in that the scavenging pipe element (16, 16a) combined with the flow guide means (22) is branched off from the jet pipe (15) in the region of the compressed-air tank (14).

6. Conveyor apparatus according to one of claims 1 to 5, wherein the housing is formed of a load-bearing column (1), characterised in that one filter unit (7) is situated in each of the quadrants (8a -8d) of the column cross-section and that the compressed-air tanks (14) of their cleaning devices (13) are arranged on a longitudinal central plane (24) of the column (1) and with their valve side parallel to same (24).

7. Conveyor apparatus according to claim 6, characterised in that filter elements (10) are provided also under the compressed-air tank (14) of each filter unit (7) in the quadrant (8a - 8d), and scavenging pipe elements (16, 16a) are branched off from the jet pipes (15) in the region of the compressed-air tanks (14) for supplying these filter elements (10) with compressed air.

8. Conveyor apparatus according to claim 6 or 7, characterised in that each cleaning device (13) is constructed to be movable pivotably away from the associated filter unit (7), and is situated with its pivoting axis (27) in the longitudinal central plane (24) dividing the quadrants (8a - 8d) from one another, and near the jet pipe plane, so that of each two filter units (7) situated at the two sides of this longitudinal central plane (24) the cleaning device (13) of the one filter unit (7) is movable pivotally to over the cleaning device (13) of the other filter unit (7) and vice versa.

9. Conveyor apparatus according to claim 7 or 8, characterised in that one of the two filter element groups (9) situated externally in the quadrant (8a - 8d) is subdivided into two rows of filter elements (10) whose scavenging pipe elements (16, 16a) have a common jet pipe (15).

10. Conveyor apparatus according to claim 9, characterised in that the jet pipe (15) of the externally situated two-row filter element group (9) has vertically branching-off scavenging pipe elements (16) for one filter element row and laterally branching-off scavenging pipe elements (16a) for the other filter element row, and the flow guide means (22) of this jet pipe (15) is provided with an aperture (23) at its edge which faces towards the first, laterally-branching-off, inflow-side scavenging pipe element (16a).

**Revendications**

1. Dispositif de transport pneumatique, avec un carter (1), raccordé à une conduite d'amenée pour le fluide gazeux à épurer, et au moins un ensemble de filtre (7), logé par celui-ci, qui se compose d'une pluralité d'éléments de filtre (10), constitués en groupes, composés chacun d'une manche de filtre (12) et d'un panier à filtre (11), où un dispositif de nettoyage (13), destiné à assurer un nettoyage périodique des manches de filtre (12) de leurs éléments de filtre, grâce à des insufflations d'air comprimé, est associé à chaque ensemble de filtre (7), ce dispositif de nettoyage (13) se composant d'un réservoir d'air comprimé (14), disposé de manière approprié à l'intérieur du carter (1), et d'au moins une lance (15), reliée au réservoir d'air comprimé (14) par l'intermédiaire d'un organe d'obturation (18) commandé, présentant un tube de balayage (16) pour chaque élément de filtre (10) du groupe d'éléments de filtre associé, lance (15) dont les orifices de sortie des tubes de balayage (16) sont disposés, avec un espacement prédéterminé, au-dessus des éléments de filtre (10) et orienté vers l'intérieur de ces derniers, caractérisé en ce qu'à l'intérieur du carter (1), qui est réalisé en particulier sous forme de colonne d'un organe de levage par succion, un moyen de guidage d'écoulement (22) est prévu dans chaque lance (15) d'un dispositif de nettoyage (13), à son extrémité d'entrée de l'écoulement, devant ou sur la ramification du premier tube de balayage (16,16a), moyen de guidage d'écoulement (22) qui présente, dans le sens d'entrée de l'écoulement de l'air comprimé, une faible résistance à l'écoulement, et, dans le sens inverse, une grande résistance à l'écoulement, et la section transversale de passage du premier tube de balayage (16,16a) étant supérieure à celle de chacun des autres tubes de balayage (16,16a) de la lance (15).

2. Dispositif de transport selon la revendication 1, caractérisé en ce que le moyen de guidage d'écoulement (22) se présente sous forme d'ailette, s'étendant à peu près sur la totalité du diamètre de la lance (15), dont le profil de section transversale est en relief (convexe) d'un côté et creux (concave) du côté opposé, et dont la face en relief est orienté à l'opposé du courant d'air comprimé qui s'introduit dans la lance (15).

3. Dispositif de transport selon la revendication 2, caractérisé en ce que le moyen de guidage d'écoulement (22) est un cylindre creux dont on prend la moitié, par rapport au diamètre.

4. Dispositif de transport selon la revendication 3, caractérisé en ce que le cylindre creux est un tube (22) divisé diamétralement, qui fait un seul tenant avec un tube de balayage (16,16a).

5. Dispositif de transport selon la revendication 4, caractérisé en ce que le tube de balayage (16,16a) uni au moyen de guidage d'écoulement (22) est ramifié en partant de lance (15), dans la zone du réservoir d'air comprimé (14).

6. Dispositif de transport selon l'une des revendications 1 à 5, le carter étant formé par une colonne porteuse (1), caractérisé en ce qu'un ensemble de filtre (7) est placé dans chacun des quadrants (8a à 8d) de la section transversale de colonne, et les réservoirs d'air comprimé (14) de ses dispositifs de nettoyage (13) étant disposés sur un plan longitudinal médian (24) de la colonne (1), et avec ses faces de soupape parallèles à ce plan (24).

7. Dispositif de transport selon la revendication 6, caractérisé en ce que des éléments de filtre (10) sont prévus également dans les quadrants (8a à 8d), au-dessous du réservoir d'air comprimé (14) de chaque ensemble de filtre (7) et des tubes de balayage (16,16a) étant ramifiés depuis les lances (15), dans la zone des réservoirs d'air comprimé (14), en vue de solliciter ces éléments de filtre (10) avec de l'air comprimé.

8. Dispositif de transport selon la revendication 6 ou 7, caractérisé en ce que chaque dispositif de nettoyage (13) est réalisé susceptible de s'écarter, par pivotement, de l'ensemble de filtre (7) associé et est placé avec son axe de pivotement (27) disposé dans le plan médian longitudinal (24) qui sépare les uns des autres les quadrants (8a à 8d), ainsi qu'à proximité du plan des lances, de façon que, des deux ensembles de filtre (7) chaque fois situés des deux côtés de ce plan médian longitudinal (34), le dispositif de nettoyage (13) de l'un des ensembles de filtre (7) soit rabattu au-dessus du dispositif de nettoyage (13) de l'autre ensemble de filtre (7) et inversement.

9. Dispositif de transport selon la revendication 7 ou 8, caractérisé en ce que l'un des deux groupes d'éléments de filtre (9), qui se trouve à l'extérieur dans les quadrants (8a à 8d), est décomposé en deux rangées d'éléments de filtre (10), dont les tubes de balayage (16,16a) présentent une lance commune.

10. Dispositif de transport selon la revendication 9, caractérisé en ce que la lance (15) du groupe d'éléments de filtre (9) à deux rangées qui se trouvent à l'extérieur présente, pour une rangée d'éléments de filtre, des tubes de balayage (16) se ramifiant verticalement et, pour l'autre rangée d'éléments de filtre, des tubes de balayage (16a) se ramifiant latéralement, le moyen de guidage d'écoulement (22) de cette lance (15) étant pourvu d'un évidement (23) sur son bord, tourné vers le premier tube de balayage (16a) qui se ramifie latéralement, du côté de l'entrée de l'écoulement.

Fig. 1

Fig. 2

Fig. 7

Fig. 3

Fig. 4

Fig. 5

Fig. 6